# EUROPEAN PATENT APPLICATION

(11) **EP 1 650 700 A2**
(43) Date of publication of application: **26.04.2006**
(21) Application number: 05105695.0
(22) Date of filing: 27.06.2005
(51) Int. Cl.: G06Q 10/00

(54) **A method for developing and managing workflows**

(30) Priority: 29.09.2004 US 614096 P; 22.03.2005 US 87123
(71) Applicant: MICROSOFT CORPORATION, Redmond, Washington 98052-6399 (US)
(72) Inventor: Hatoun, George E., 98052, Redmond (US); Aziz, Imran, 98052, Redmond (US)
(74) Representative: Grünecker, Kinkeldey, Stockmair & Schwanhäusser Anwaltssozietät

(57) **Abstract**

A method for developing and managing work-flows is disclosed. The method enables the development of workflows from workflow templates and/or preprogrammed components; associating a workflow with a schedule; modeling a workflow as a plurality of tasks and a plurality of human-to-human or human-to-computer interaction points; and persistently storing the internal state of a workflow. The method employs computer-implemented forms to control the development, packaging, installation, deployment, enablement, association, instantiation, and termination of workflows.

## Description

### CROSS-REFERENCE TO RELATED APPLICATION

Pursuant to 35 U.S.C. § 119, this application claims the benefit of the filing date of Provisional Patent Application No. 60/614,096, filed September 29, 2004, titled WORKFLOW IN A COLLABORATIVE APPLICATION, the subject matter of which is also incorporated herein by reference.

### FIELD OF THE INVENTION

The present invention relates to computer software, and more particularly, to the reuse of workflows.

### BACKGROUND OF THE INVENTION

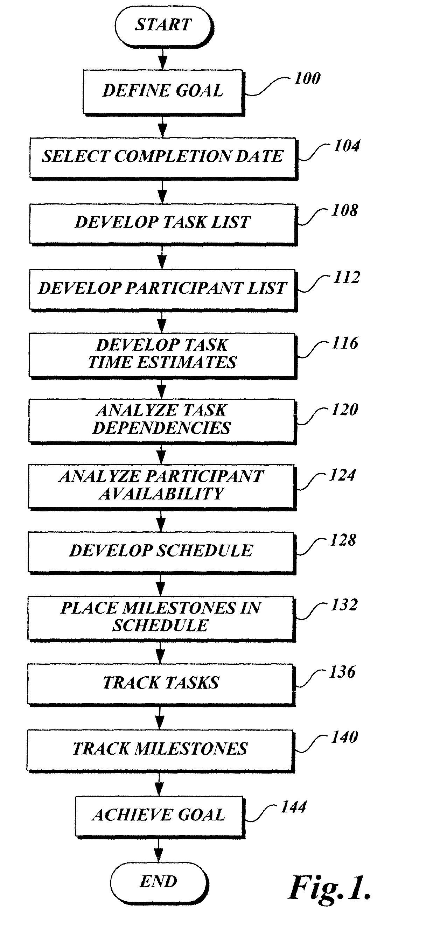

The need to manage the execution of project tasks has existed as long as people have worked collaboratively. A simple but exemplary task management process is shown in FIGURE 1. The activities represented by blocks 100 through 132 may be considered preparatory steps, and the activities represented by blocks 136 through 144 may be considered steps in the ongoing management of a project. First, a goal or set of goals for a project are defined 100. Then, a completion date for achieving the goals is set 104. Next, a list of tasks that must be executed to achieve the goals by the completion date is developed 108. A list of participants able to execute the tasks is also developed 112. Preferably, estimates of how much time each task will take given the available participants are developed 116. Dependencies between tasks are also preferably developed, i.e., what task or tasks must be completed before another task can begin 120. The periods of time in which participants are available to execute tasks may also be noted 124. Using the information from the previous steps, a schedule of tasks for the project is developed 128. Within the schedule of tasks, milestones, i.e., checkpoints, are established in order to ensure that tasks are completed correctly and on time 132. At block 136, work on the project itself begins and tasks are executed and tracked. As the time set for each milestone arrives, the status of related tasks and the whole project is assessed 140. When all the tasks have been accomplished and all the milestones have been met, the goal of the project is achieved 144.

The linear task management process shown in FIGURE 1 and described above, ignores complicating factors like steps of the process being rearranged, combined, or removed, or new steps being inserted; some participants being sidetracked by other tasks; requirements and goals of the project changing while work on the project proceeds; and the process having to be adjusted. To confound task management even more, until computing devices and computer software were widely available to organizations, the planning, management, and tracking of tasks was done by manually creating and updating lists, charts, diagrams, and other visual representations of information. Such tools of management were often handwritten or typed and not easily changed. Until computer-based messaging, i.e., email, became available, contacting the participants charged with executing the tasks took the form of often unreliable and hard to track verbal communication or time consuming written memos.

The next stage of development in the history of task management was enabled by computing devices and computer software. Many of the planning, listing, diagramming, charting, and communication chores were sped up and made easier through the brute force application of computer software tools. However, these chores were still executed with little coordination among the chores or the participants. Most attempts at coordinating these chores involved nontrivial computer programming which required the time, effort, and cost of highly trained computer programmers. Using computer software tools to automate at least some parts of a business process made it easier to think about the flow of work through a business process. Thus, computer software tool development shifted from focusing on a given business process to focusing on the "workflow" that runs through a business process.

Note that a workflow is not a business process. A workflow is an abstraction of how work flows through a business process. For example, given a business process for approving documents, a workflow may be developed to track a particular document through the approval process as each participant in the approval process receives and approves the document. This abstract notion of a "workflow" has been modeled in computer programs and computer software for supporting workflow through a business process has become known as a "workflow." Hereinafter, the term "workflow" refers to such a software model, i.e., a software program that supports how work flows through a business process.

A workflow allows the flow of work between individuals and/or departments to be defined and tracked. While it is true that a workflow enables the automation of many task management chores, the overwhelming value of a workflow is in the coordination the workflow provides among the many chores inherent in task management. More practically, a workflow helps automate business tasks and electronically route the right information to the right people at the right time. Participants are automatically notified of pending work. Managers are able to route approvals through the system quickly. A workflow may also provide graphical representations of the flow of work in a project, including dependencies and the sequence of decisions and activities.

There is no question that workflows significantly improve task management; however, workflow development requires the costly labor of highly trained computer programmers and workflow deployment requires significant labor and cost. Even though workflows are often similar to each other, workflow development and deployment tools in the prior art make it difficult or impossible to take a workflow developed for one project and apply it to another project. What is needed is a way to amortize the labor and cost required to develop one workflow over many workflows by reusing a workflow for more than one project. The present invention is directed to reusing workflows by providing a method and apparatus for associating the structure and metadata of a workflow developed for one project with other projects.

### SUMMARY OF THE INVENTION

In accordance with aspects of the present invention, a method and apparatus, including computer-readable medium, for creating workflows using workflow templates is provided. The use of workflow templates allows the method and apparatus to associate the structure and metadata of a workflow developed for one project with other projects. A workflow is associated with a schedule by assigning values to parameters, inserting new parameters, disabling existing parameters, enabling existing features, disabling existing features, and/or inserting computer-implemented forms. Associating a workflow with a schedule is controlled through graphical user interfaces that display computer-implemented forms.

In accordance with one aspect of the invention, a workflow is developed using a workflow template. The template preferably allows preprogrammed workflow components to be inserted and/or removed, values to be assigned to parameters in workflow components, new parameters to be inserted into workflow components, and parameters already existing in a workflow component to be disabled. A developed workflow is packaged for installation preferably by assigning values to parameters, inserting new parameters, and/or disabling existing parameters, and storing the workflow and related data in a persistent store. Preferably, a workflow may be installed, deployed, and/or enabled. A workflow may be instantiated and/or terminated.

In accordance with yet another aspect of the invention, a workflow that has been instantiated and reached a state of acquiescence may be disabled, and parameter values describing the internal state of the workflow may be persistently stored for an arbitrarily long length of time and restored and re-enabled using said persistently stored parameter values.

In accordance with other aspects of the invention, the structure and metadata of existing workflows are reused by developing workflow templates and using workflow templates and/or preprogrammed workflow components. A workflow is modeled as a plurality of human-to-human and/or human-to-computer interaction points. Interaction points may occur in arbitrary order. A workflow may be comprised of a plurality of tasks. A task may be completed by a single user with or without input data. A plurality of tasks may be completed by a single manager with or without input data. Tasks may be assigned to one or more users, delegated to one or more users, and/or forwarded to one or more users. Tasks in the workflow may be defined using computer- implemented forms developed by a third party. Developing a workflow, packaging a workflow, installing a warkflow, deploying a workflow, enabling a workflow, associating a workflow with a schedule, instantiating a workflow, and terminating a workflow are controlled through graphical user interfaces that display computer-implemented forms.

As will be readily appreciated from the foregoing description, the present invention provides a method and apparatus for reusing the structure and metadata of existing workflows by associating the structure and metadata of a workflow developed for one project with other projects.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a flow diagram showing an exemplary linear task management process;
FIGURE 2 is a block diagram showing the major components of SharePoint that support an exemplary embodiment of the invention;
FIGURE 3 is a flow diagram showing the stages in a workflow life cycle;
FIGURE 4A is a flow diagram showing the development of an exemplary workflow;
FIGURE 4B is an exemplary graphical user interface for designing a workflow;
FIGURE 4C is an exemplary graphical user interface for associating a workflow template with a document library;
FIGURE 4D is an exemplary graphical user interface for customizing a workflow;
FIGURE 5A is a flow diagram showing how an exemplary workflow is packaged;
FIGURE 5B is a block diagram of the top level components of an exemplary workflow package;
FIGURE 6 is a flow diagram showing how an exemplary workflow package is installed;
FIGURE 7A is a flow diagram showing how an exemplary workflow is deployed;
FIGURE 7B is an exemplary graphical user interface for creating a new workflow and associating the workflow with a document library;
FIGURE 7C is an exemplary graphical user interface for viewing and selecting the workflows associated with a document library;
FIGURE 7D is an exemplary graphical user interface for setting the tasks in a workflow;
FIGURE 7E is an exemplary graphical user interface for setting parameter values of a document library associated with a workflow;
FIGURE 8 is a flow diagram showing how an exemplary workflow is enabled;
FIGURE 9A is a flow diagram showing how an exemplary workflow is associated with a content type;
FIGURE 9B is a flow diagram showing how an exemplary workflow is associated with a document list or library;
FIGURE 10A is a flow diagram showing how an exemplary workflow is instantiated;
FIGURE 10B is an exemplary graphical user interface that displays overdue tasks in a workflow;
FIGURE 10C is an exemplary graphical user interface that displays active issues in a workflow;
FIGURE 10D is an exemplary graphical user interface that provides access to a plurality of reports for a workflow;
FIGURE 11A is a flow diagram showing how an exemplary workflow is terminated; and
FIGURE 11B is an exemplary graphical user interface that enables termination of workflows.

### DETAILED DESCRIPTION OF THE PREFERRED EMBODIMENT

Embodiments of the invention provide a computer-implemented method and apparatus (tool), including computer-readable medium, for associating the structure and metadata of a workflow developed for one project with other projects and for developing and using workflocvs and workflow templates. A workflow may be created directly or by using a workflow template. The first part of the description is directed to defining workflows and explaining how they are directly created. Workflow templates and using workflow templates to create workflows are described later.

A workflow includes information about a business process such as: (a) the procedural steps of the business process; (b) the persons involved at each step of the business process; (c) the input information and output information required at each step of the business process; and (d) the tools needed at each step of the business process. As those skilled in the art will readily appreciate, a workflow may include other types of information in addition to the aforementioned exemplary types of information.

In an exemplary embodiment of the invention, the model upon which a workflow is based closely models a human workflow, i.e., the events and items normally associated with human interaction points in the lifecycle of a workflow. Such workflow modeling provides for difficult to predict events during human/workflow interaction, e.g., vacations, illness, forgetting steps in the process, and the like. For ease of discussion, the humans which interact with a workflow are referred to by their roles in relation to the workflow: (a) owner, the person who creates and controls a workflow; (b) developer, a person who designs and implements all or parts of a workflow and/or workflow components; and (c) participant, a person who participates in one or more activities controlled by the workflow. Activities include, but are not limited to, review, revision, and approval. Obviously, the "roles" may overlap. For example, the owner may also be a developer and/or a participant. An entity that responds to input from a workflow is an "actor." An actor may be a participant or a computing device. Preferably, human actors interact with an embodiment of the invention by using graphical user interface forms (GUI forms). A GUI form may be a window in an application, a Web page, or like graphical user interface component that enables human actors to enter view, select, and/or enter information.

By way of example, and not limitation, exemplary embodiments of the invention, i.e., methods and apparatus for developing and using workflows, may be supported within a collaborative computer application such as Microsoft® SharePoint™ Portal Server (SharePoint). SharePoint is a scalable portal server that integrates information from various networked computing devices and networked computing systems into one software entity to provide convenient portal deployment and administration. Those skilled in the art will appreciate that a portal is a site, such as a Web site, that serves as a gateway to a network, such as the Internet. A Web site portal is a collection of links, content, and services designed to guide users to information they are likely to find interesting ― news, weather, entertainment, commerce sites, chat rooms, and so on. Yahoo!, Excite, MSN.com, and Netscape NetCenter are examples of portals. The services provided by SharePoint are collectively referred to as Windows SharePoint™ Services (WSS). The GUI forms used to interact with WSS are referred to as WSS forms.

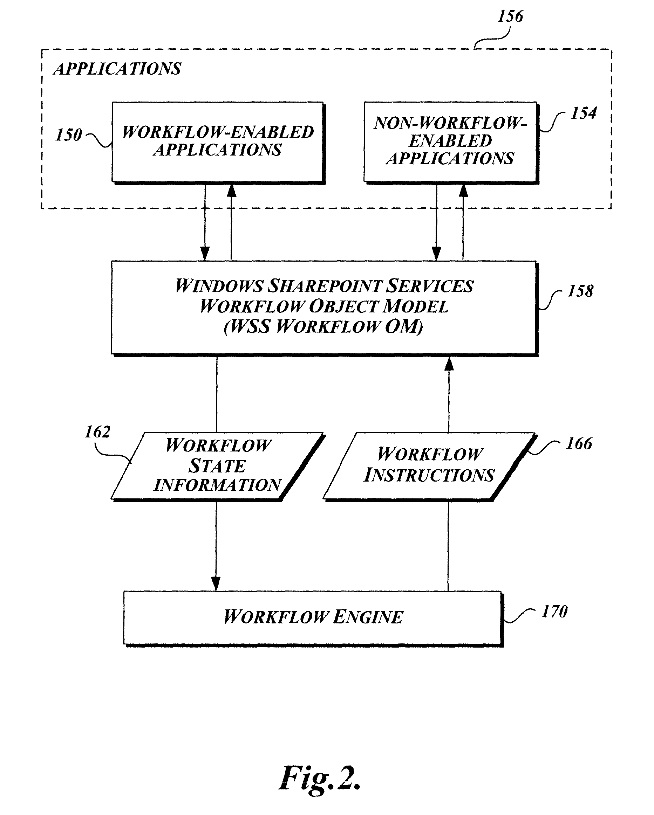

An exemplary embodiment of the invention operates as a SharePoint service. A SharePoint service provides collaboration and information sharing and may also provide integration with other software applications. FIGURE 2 is a block diagram showing the major components of SharePoint that support an exemplary embodiment of the invention and the relationships among the major components. The illustrated major components include applications 156, a Windows SharePoint Services Workflow Object Model (WSS Workflow OM) 158, and a workflow engine 170, such as the workflow engine in Windows Workflow Services. An "object model" comprises the application programming interface (API) and the data structures used by the API, i.e., data structures passed to and returned from functions written to the API. The WSS Workflow OM 158 comprises the Windows SharePoint Services Workflow API and the data structures used by the Windows SharePoint Services Workflow API. The applications 156 may be workflow-enabled or non-workflow enabled. Workflow-enabled applications 150 are applications that contain features that are specific to workflows. Non-workflow-enabled applications 154 are applications that may interact with a workflow as a service, but do not contain features specific to workflows.

The WSS Workflow OM 158 is the interface through which passes workflow state information 162 to the workflow engine 170. The workflow engine 170 runs a workflow and provides a workflow with support for scheduling, messaging, data persistence, role definition, and task tracking. The workflow may cause instructions 166 to be generated. The workflow engine 170 passes the workflow instructions 166 through the WSS Workflow OM 158 to the applications. Note that the applications 156 interact with the WSS Workflow OM 158 to access SharePoint services. Since a workflow is a SharePoint service, a workflow is accessed through the WSS Workflow OM 158. Thus, applications 156 are able to access the workflow through the WSS Workflow OM 158. Also note that a workflow does not interact directly with the WSS Workflow OM 158. The workflow engine 170 interacts with the WSS Workflow OM 158 providing workflows with an interface to the WSS Workflow OM 158.

A workflow interacts with the workflow engine and the workflow engine interacts with the WSS Workflow OM 158. For example, a participant may perform an action in an application 56 that is intended to change the state of a workflow. The application 156 passes a message to the WSS Workflow OM 158. The message contains information that identifies the workflow and specifies a workflow state change. The WSS Workflow OM 158 converts the message from the application to workflow state information 162 and passes the workflow state information 162 to the workflow engine 170. The workflow engine 170 selects the intended workflow from among the workflows the workflow engine 170 is running and passes the workflow state information 162 to the workflow specified in the message from the application 156.

The workflow engine 170 runs a workflow by advancing the workflow through a workflow schedule. A workflow schedule is a data structure containing tasks, workflow logic, and various metadata. In an exemplary embodiment of the invention, a WSS workflow schedule, suitable for running in Windows Workflow Services and associated with a WSS workflow, is an XML structure that contains workflow tasks and logic. Such a WSS workflow schedule may be stored as an XML file in a workflow package installed in a suitable site, such as a Web site.

While advancing through a workflow schedule, a workflow often operates on documents and lists. In the context of SharePoint, a document is any self-contained piece of work created with an application, and, if stored persistently, is given a unique filename by which it can be retrieved. In the context of SharePoint, a list is an abstraction for a relational schema of well-defined field types. A list may contain one or more documents. As with relational schema, lists have certain unique characteristics that differentiate one list from another list. A specific group of lists may be selected from a plurality of lists by using a "profile." A profile is a filter comprising the characteristics of the desired lists. A function applied to a list may also be applied to the lists that result from the application of a profile to a plurality of lists. A more specific kind of list, called a document library, may not only contain documents, but may also organize the documents in a way that makes it easy to search and filter data about the documents and data contained in the documents. For example, a workflow document requires that the document be approved by one or more participants. Versions of the document may be created, canceled, modified, etc. in the course of a workflow lifecycle. A workflow associated with such a document manages and tracks such activities.

A workflow normally begins as a workflow definition. A workflow definition is an installable package of software containing a Windows Workflow Services workflow schedule and the supporting code files and forms required to fully specify a workflow. A specific workflow is created when a workflow definition goes through the processes of workflow association and workflow parameterization. Workflow association is the process of making a workflow available on a list or profile. Workflow parameterization is the process of collecting and submitting to the workflow a set of parameters, such as participants, due date, routing order, and so on. Some parameterization happens when the workflow is associated with a list or a profile. Some parameterization happens when the workflow is initiated. The workflow designer, i.e., the workflow developer or workflow owner, decides what parameters to include and when to ask for their values.

A workflow may run from start to finish without needing input from an actor; however, it is more likely that a workflow will require some external input from an actor to proceed. Actors, i.e., participants and computing devices, may provide external input to a workflow running on a workflow engine, i.e., Windows Workflow Services, at certain discrete, well defined points in the workflow. Such a point is referred to as a "task." Conceptually, a task may be considered a unit of work having a beginning, an end, and associated metadata, such as status information. Each workflow contains a set of task lists. Each workflow stores its task in a task list.

A workflow can be associated with a list (where a document library is a type of list) or a content type. Workflow association settings are stored as properties of a list. These settings are preserved if the list is copied. These settings are preserved if the library is copied.

In a WSS embodiment of the invention, a task may be defined by using an application such as Microsoft Office InfoPath™ or Microsoft Visual Studio™, or tasks may be defined using custom data collection forms, i.e., GUI forms or WSS forms, developed by an Independent Software Vendor (ISV). Tasks are completed by participants. For example, a participant may click a link for a task to view a form for the task. The participant enters data into the form and somehow indicates that the form is complete, by selecting a checkbox indicating that the form's "Status" is "Complete," for example. An application 156 providing the form passes the status information to the WSS Workflow OM 158, which passes the status information as workflow state information 162 to the workflow engine 170. The workflow engine 170 receives this information and passes back a workflow instruction 166 to notify the workflow's owner that the task is complete. In a similar process, a workflow owner, i.e., a project manager, may complete multiple tasks by selecting a set of tasks with similar requirements and marking them as complete or approved.

An exemplary embodiment of the invention uses a particular kind of WSS task called a "ToDo." A ToDo is a task to be accomplished by an actor. A ToDo may be completed, canceled, or delegated. A ToDo is synchronized with other ToDos to execute the appropriate actions that, in turn, cause the appropriate message or messages to be sent to the workflow engine 170. A workflow begins the process of requesting external input by creating a ToDo and directing it to a set of actors. Since a ToDo is a type of WSS task, a ToDo can be inserted into a WSS task list and be assigned to actors. A ToDo is extensible in that it can have an arbitrary schema representing the data needed by the workflow at a particular point in the schedule running within the workflow engine. A ToDo can be delegated or forwarded to other actors. In the absence of requiring input data, ToDos can be completed outright. If data from a participant is required to complete a ToDo, the data is collected by presenting the participant with a form. After the data is entered into a form, the data is submitted to the WSS Workflow OM 158 which then submits workflow state information 162 to the workflow engine 170.

Information is passed from the WSS Workflow OM 158 to the workflow engine 170 as messages. In an exemplary embodiment, the types of messages comprise activation, send, and receive. The messages are generated by "Save" events in WSS. For example, as part of a workflow state transition within a workflow engine, a workflow schedule may create a workflow task and specify the subscriptions of the "Save" event, i.e., specify which software objects will be notified of a "Save" event. The creation of the workflow task by the workflow schedule within the workflow engine is translated into the action of creating a ToDo in WSS and registering the appropriate ToDo events. In an exemplary embodiment of the invention, when a participant submits a form to complete the ToDo, the ToDo executes a "Save" event in the supporting database by submitting a request that causes the following actions to execute:
1. A round trip to the database is made to fetch metadata about the ToDo using untyped events.
2. Pre-event handlers are executed and an Access Control List (ACL) check is performed.
3. The payload of the request is saved and an event queue payload is constructed. The database server calculates the changes the "Save" operation will cause in the database. Based on filtering done in the middle tier, the database server reduces the set of untyped events to the specific set of appropriate typed events.
4. Another round trip to the database is made to execute the "Save" transaction. The following actions are executed within the "Save" transaction:
   a. The "Save" is committed in the database.
   b. Typed events for the operation are generated and enqueued in the event queue.
   c. The workflow schedule is locked.
   d. The workflow schedule is serialized, and the serialized workflow schedule is returned as the result of the transaction.
5. If the workflow schedule is successfully obtained, a "Post-Save" event is delivered asynchronously in the middle tier.

At item 4.c., if the locking of the workflow schedule fails, which may occur because some other process on some other machine may have locked the workflow schedule, the workflow schedule is serialized and returned to complete the transaction, but the "Post-Save" event is not delivered. Based on an adaptive timing scheme, the "Post-Save" event is delivered when the workflow schedule is able to be locked. Upon the completion of a ToDo, the ToDo may be deleted using a process similar to the one described above. Such a ToDo deletion causes the WSS Workflow OM to delete the ToDo, as well as the appropriate subscriptions on the ToDo.

When a workflow creates a ToDo, one or more links are established between the ToDo and the schedule running in the workflow engine 170 and associated with the workflow. The ToDo registers for one or more of the events that are generated by the form used to submit data to the ToDo. When a participant enters data into one or more fields of the form, an event is generated. The ToDo detects the event, processes the submitted data, and passes the processed data to the workflow-enabled or non-workflow-enabled application 150, 154. The workflow may respond with a workflow instruction 166. A typical instruction is to update the ToDo. When a ToDo is updated, a plurality of consistency checks are performed. If all checks are successful, an asynchronous event is enqueued for delivery to the schedule which initiated the ToDo. Consistency checks include, but are not limited to, checks for synchronization, security, and data validity. In order to maintain database consistency, the enqueuing of the asynchronous event occurs in the same transaction as the update to the ToDo. Once an event is enqueued for delivery to the workflow schedule, the participant submitting the update is notified that the update has been successfully delivered.

Events may be delivered to a workflow asynchronously for a number of reasons. One reason is that an embodiment may allow only one instance of a schedule and the instance of the schedule may only be allowed to run on a single, arbitrary, middle-tier machine. Though it is possible to route a new event arriving on one middle-tier machine to a running schedule's instance on another middle-tier machine, such a mechanism adds unnecessary complexity to the overall design. So, in the case where the schedule is in an active running state, and assuming no routing mechanism exists to deliver new events to a running schedule, workflow events must be enqueued for consumption at a later time. Once there are pending events in a queue waiting to be consumed by their respective workflow schedule, a mechanism must be designed to dequeue the events. As it is inefficient to synchronously poll to see if a schedule is able to consume events, the dequeuing process is handled asynchronously. Relying upon an asynchronous dequeuing mechanism for event delivery also means that a single code path can be used in both the nominal code execution path, as well as the exceptional code path, i.e., where event delivery and consumption failed to complete and must be retried at a later time. Note that, if desired, the event queue may be a table in a database and not maintained in memory. This adds robustness to the design, guarding against catastrophic system failure.

Preferably, an event is dequeued directly by the workflow that owns the event once the workflow has been bootstrapped into a running state. Once running, the workflow consumes the events designated for the workflow by taking the events from the event queue in FIFO order. Events on the event stack designated for a workflow ultimately advance the workflow through the schedule causing the schedule to eventually complete.

In the herein described exemplary embodiment, WSS hosts the workflow engine, i.e., Windows Workflow Services, and provides persistent storage for the state of workflows. During the time that a workflow runs to completion, there are points at which the state of the workflow may be persistently stored. The state of a workflow may be captured and persistently stored at points explicitly defined in the schedule by the workflow developer or at points of acquiescence. A point of acquiescence is a point at which the workflow enters a state of acquiescence, i.e., a period of time in which no useful work or interaction happens. In essence, the workflow is waiting for a long and indeterminate amount of time for something to happen. When such a condition is detected, the workflow sets a transaction point. At a transaction point, a workflow collects data describing the internal state of the workflow and persistently stores the internal state data with the corresponding schedule in a database. Along with this transaction, other schema management may also occur. The workflow state of a schedule is stored in its serialized form in either binary or XML. At a transaction point, a workflow may be put into a state of "hibernation." Workflow hibernation is a state in which a workflow schedule consumes no computing resources other than the static storage persisted in the database. For example, if all workflow threads are blocked on ToDo task completions and there are no pending events to be delivered to the workflow, the workflow's exclusive lock is released and the workflow is allowed to go into hibernation. Preferably, an active process continually monitors the event queue looking for events that need to have the workflows that own them woken up. Once such a workflow has been identified, a suitable middle-tier machine is designated as a host for the workflow. The binary code and state information for the workflow are loaded from persistent storage onto the host machine. The workflow is bootstrapped into a running state.

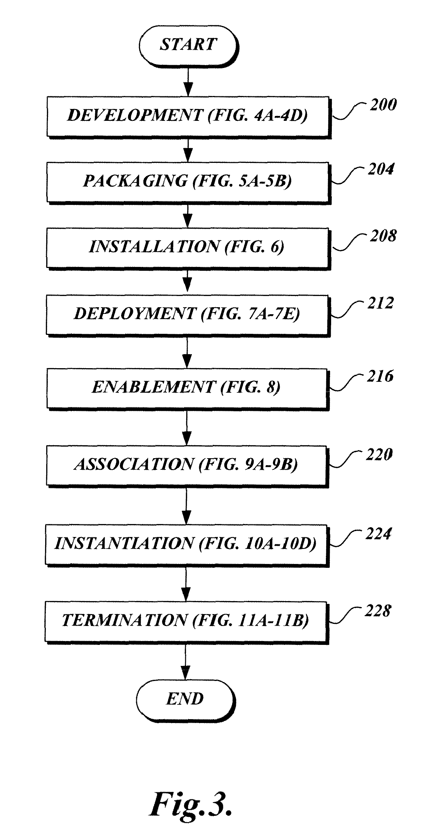

Supported by the aforementioned description of workflows, is a foregoing explanation of how a project manager, i.e., workflow owner, uses an embodiment of the invention running in a collaborative application such as SharePoint to create a workflow to manage a project. First, a workflow developer develops a workflow definition. The developer packages the workflow definition and installs the workflow definition on a server to enable the workflow owner to access the workflow definition. Then, the owner deploys the workflow definition, i.e., copies the workflow definition to use for a particular project. The owner enables, i.e., activates, the deployed workflow definition, associates the deployed workflow definition with the set of documents for the project, and instantiates the deployed workflow definition, i.e., creates the workflow for the project. Finally, the owner starts the workflow for the project. Thereafter and until the workflow is terminated, participants interact with the workflow by using GUI forms to complete tasks for the project and the owner uses GUI forms to check the progress and the like. The aforementioned process is referred to as the "workflow lifecycle" and is illustrated by the flow diagram in FIGURE 3 and described in detail below.

As shown in FIGURE 3, the lifecycle of a workflow is comprised of eight stages. A brief definition of each stage is given next with details for each stage described below. The first stage is a Development stage 200. During the Development stage a workflow is defined and the parts or elements that comprise the workflow are created. The second stage is a Packaging stage 204. During the Packaging stage the workflow itself is set up using the parts or elements created during the development stage. Setting up a workflow is usually done after the Development stage 200 is complete; however, some computer applications like Microsoft FrontPage© allow workflows to be edited during the Development stage 200. The third stage is an Installation stage 208. During the Installation stage the workflow package is loaded onto a server. The fourth stage is a Deployment stage 212. During the Deployment stage a definition of the workflow is installed on a server and workflow participants are associated with the workflow. The fifth stage is an Enablement stage 216. During the Enablement stage the workflow owner turns on features in the workflow so others (participants) can see the workflow. The sixth stage is an Association stage 220. During the Association stage the owner associates the workflow with a document library and/or lists. The seventh stage is an Instantiation stage 224. During the Instantiation stage workflow parameter values are set and the workflow is started. The eighth and final stage is a Termination stage 228. The Termination stage occurs when all of the tasks in the workflow are completed or the workflow is canceled.

An example of a workflow is used to aid in understanding the detailed explanation of each stage. The exemplary workflow is used by a group of participants working on a project involving the development of video editing tool.

During the Development stage 200, the parts that comprise the workflow or workflow template are developed and/or gathered by a workflow developer or a workflow owner. Since the workflow developer plays the primary role in the development stage, only the workflow developer is referred to during the Development stage 200. The developed and/or gathered parts include, but are not limited to: (a) a workflow schedule; (b) views of data used by or related to the workflow; (c) computer-implemented forms supporting the warkflow; and (d) metadata about the workflow. The developed and/or gathered parts may be created using computer applications like Microsoft Visual Studio© or Microsoft FrontPage©. During the Development stage 200, for each part in a workflow definition, an interaction may set up between the part and SharePoint and/or an application like Microsoft Office© running on client computing devices.

Although the developed and/or gathered parts may be created directly as described above, it is more advantageous to use a workflow template to create a workflow. A workflow is created from a workflow template by copying the workflow template and modifying the workflow template copy to change the workflow template copy into the desired new workflow. The workflow template allows the structure and metadata of a workflow developed for one project to be associated with other projects. Note that a workflow template is not a GUI form but, instead, is a set of workflow components which are then modified using GUI forms.

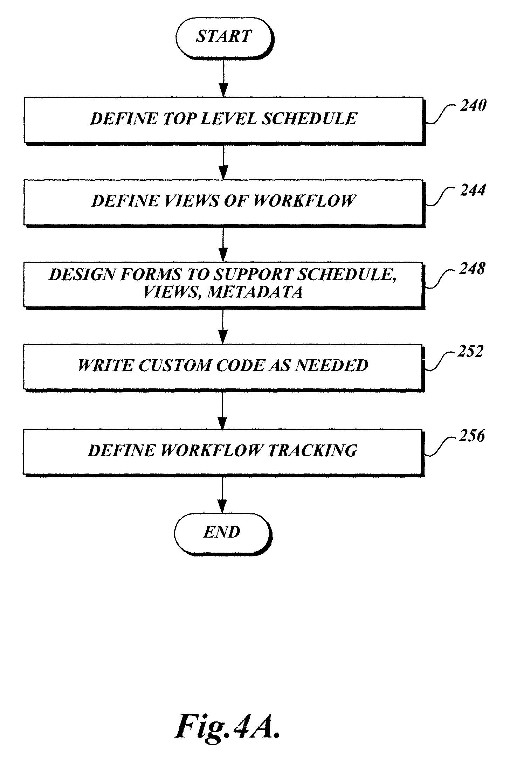

FIGURE 4A is a flow diagram showing the typical order in which the parts or elements of a workflow are developed and gathered either directly or by using a workflow template. If the workflow is developed directly, each part or element is created using the default values determined by the type of the part or element. If the workflow is developed using a workflow template, it is likely that most of the parts or elements will be available and only need to be modified to meet the requirements of the new workflow. Referring to FIGURE 4A, the top level schedule of the workflow is defined 240. Next, views of the data and metadata that define the workflow are defined 244. Form templates designed to present and collect information about the schedule, views, and metadata of the workflow are presented to the developer for use in designing forms to support schedule, views and metadata 248. Next, custom computer code is written, as needed 252. Finally, how and when the tasks of the workflow are tracked is defined 256.

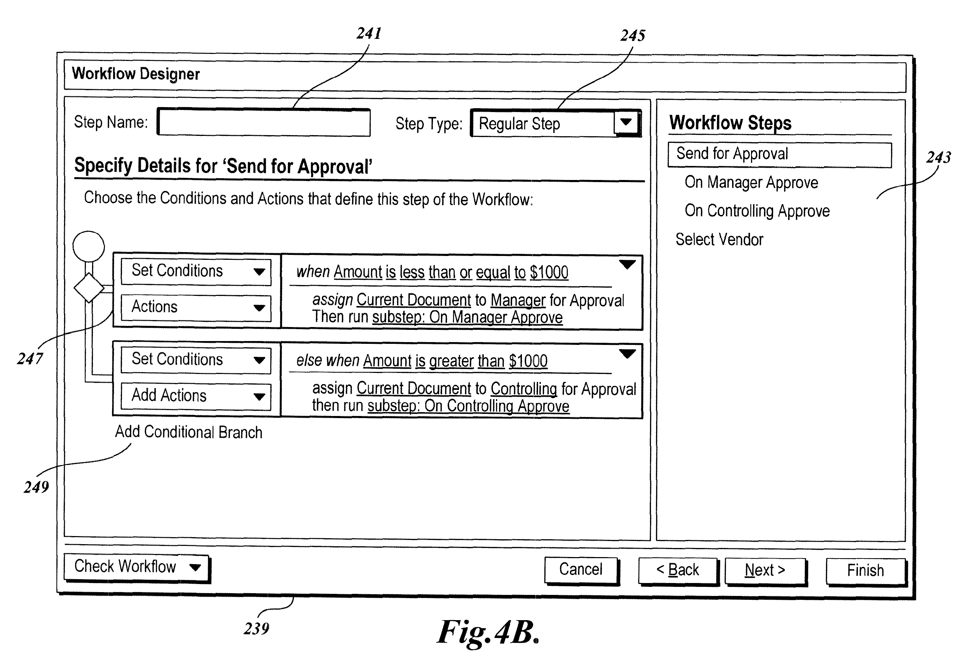

During the Development stage 200, forms are provided to enable a workflow developer to accomplish the aforementioned steps. FIGURE 4B is an exemplary GUI form 239 for designing a workflow. A field 241 in the GUI form is provided to enter the name of the step in the workflow. Exemplary steps 243 of the workflow are displayed on the right side of the form. The exemplary steps are "Send for Approval" and "Select Vendor." The "Send for Approval" step has two subcriteria, namely "On Manager Approve" and "On Controlling Approve." In FIGURE 4B, highlighting denotes that the step selected for editing is "Send for Approval." Clicking on the "Send for Approval" step causes the step name (not shown) to be shown in the field 241. The "Send for Approval" step is designated as a "Regular Step" in the display field 245 of a drop down menu. Other types of designations are included in the dropdown menu. Within a workflow step conditions and actions that occur when the conditions are met are settable.

In the exemplary workflow "Send for Approval" step shown in FIGURE 4B two conditions, each with associated actions, are illustrated. The first condition is "when Amount is less than or equal to $1000," and the action that occurs when the first condition is met is "assign Current Document to Manager for Approval Then run substep: On Manager Approve." The second condition is "else when Amount is greater than $1000," and the action that occurs when the second condition is met is "assign Current Document to Controlling for Approval then run substep: On Controlling Approve." Note that the two "actions" correspond to the two subcriteria "On Manager Approve" and "On Controlling Approve" illustrated on the right side of FIGURE 4B and described above.

Note that certain terms in the conditions and actions illustrated in FIGURE 4B are underlined. In the herein described exemplary embodiment of the invention, an underlined term may be changed. Underlined conditions and actions may be provided, for example, in a GUI form that is part of the workflow template used to create the workflow. At the bottom of the GUI form 239, buttons are provided to enable the developer to: (a) check the workflow, "Check Workflow;" (b) cancel the editing of the workflow, "Cancel;" (c) go back to a previous step, "Back;" (d) advance to the next step, "Next;" and (e) finish editing the workflow, "Finish."

Additional conditional branches may be created by selecting "Add Conditional Branch" 249. Selecting "Add Conditional Branch" 249 causes a new block of conditions and actions 247 to be inserted after the existing conditional branches. The type of each component within a block of conditions and actions may be selected using drop down menus. For example, on the left side of the block of conditions and actions 247, "Set Conditions" and "Actions" are selected from drop down menus. On the right side of the block of conditions and actions 247, the condition "when Amount is less than or equal to $1000" is selected from a drop down menu as is the condition "else when Amount is greater than $1000."

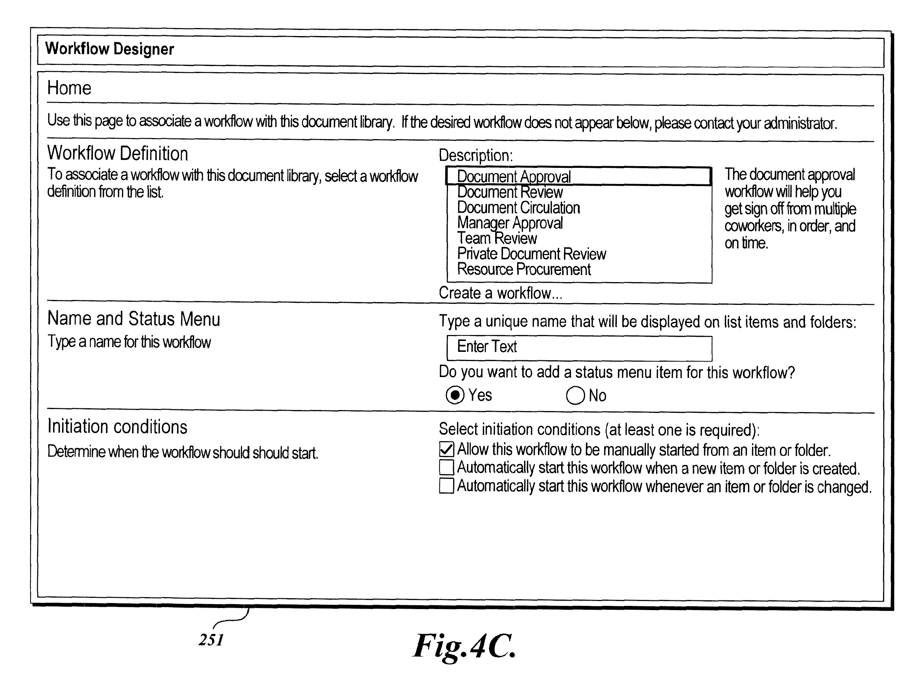

Another activity supported during the Development stage 200 is associating a workflow with a document library. FIGURE 4C shows an exemplary GUI form 251 for associating a workflow with a document library. The GUI form 251 includes three sections whose titles reflect the three activities involved in associating a workflow with a document library: "Workflow Definition," "Name and Status Menu," and "Initial Conditions." The "Workflow Definition" section presents the workflow developer with a list of workflow templates. Exemplary workflow library association templates "Document Approval," "Document Review," "Document Circulation," "Manager Approval," "Team Review," "Private Document Review," and "Resource Procurement" are illustrated. The workflow developer may select a workflow library association template from the list of workflow library association templates. Alternatively, if the list does not include a suitable template, the workflow developer can select "Create a workflow...," which allows the workflow developer to create a new workflow library association template. The "Name and Status Menu" section allows the workflow developer to create a unique name for the workflow library association. Normally the name will be based on the previously selected workflow library association template. The Name and Status menu section also includes a radio button, which allows the developer to add a menu item for the workflow being associated with a document library to a status menu. The "Initial Conditions" section allows the developer to select one or more initial conditions for the newly created workflow library association. Possible initial conditions are: "Allow this workflow to be manually started from an item or folder."; "Automatically start this workflow when a new item or folder is created."; and "Automatically start this workflow whenever an item or folder is changed."

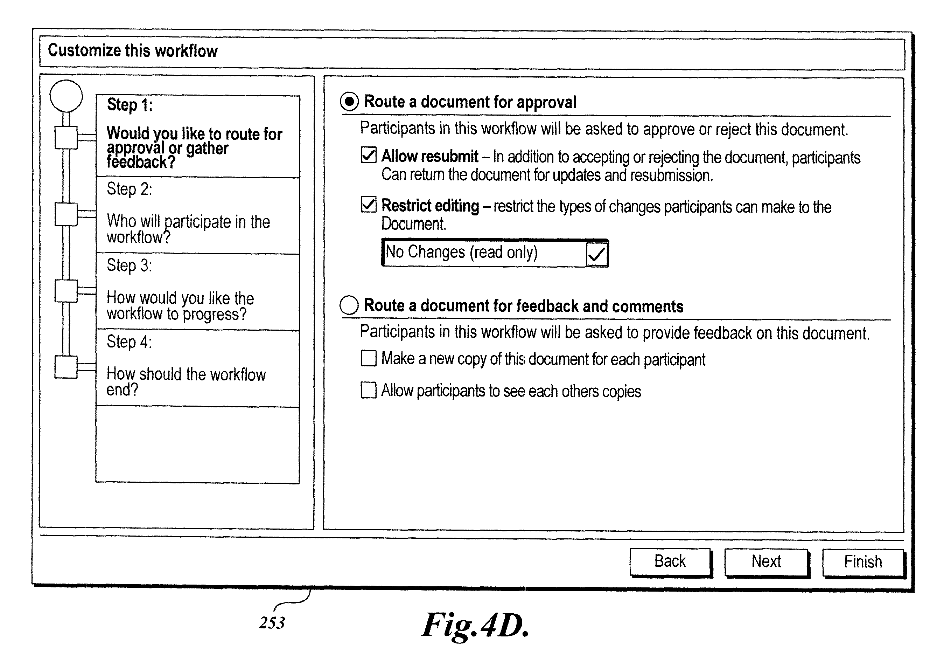

In the exemplary embodiment of the invention described here, after a workflow is created during the Development stage 200, the workflow may be customized. An example of a GUI form 253 for customizing a workflow is shown in FIGURE 4D. The illustrated customizing GUI form 253 presents the workflow developer with four questions shown as a sequence of steps on the left side of FIGURE 4D: (I) Would you like to route approval or gather feedback? (2) Who will participate in the workflow? (3) How would you like the workflow to progress? (4) How should the workflow end? Selection of one of these "questions" causes a related panel to appear on the right side of the GUI form in FIGURE 4D. In the example shown in FIGURE 4D the workflow developer has chosen the first step -- Would you like to route approval or gather feedback? This step opens a panel having two choices: "Route a document for approval" and "Route a document for feedback and comments" -- each has two subchoices. The subchoices of the "Route a document for approval" choice are: "Allow resubmit" and "Restrict editing." "Restrict editing" has a control check box that prohibits changes titled "No Changes (read only)." The subchoices of the "Route a document for feedback and comments" choice are: "Make a new copy of this document for each participant" and "Allow participants to see each others copies."

In the example shown in FIGURE 4D, the workflow developer has chosen "Route a document for approval." The workflow developer has also chosen to allow participants to resubmit an updated Document (Allow resubmit) and to restrict editing of the original Document (Restrict editing).

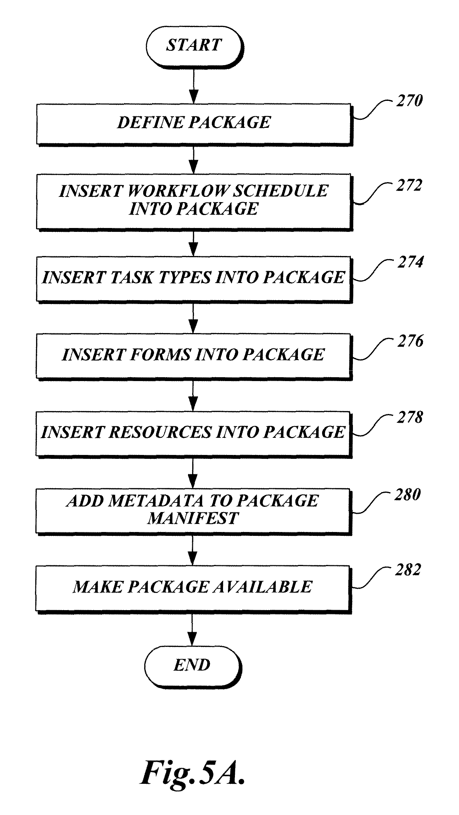

As shown in FIGURE 3 and described above, after the Development stage, a workflow is packaged during the Packaging stage 204. The steps of an exemplary Packaging stage are shown in FIGURE 5A. The steps of the Packaging stage 204 may be performed by a workflow developer or workflow owner; however, for ease of description the following discussion assumes that the steps are performed by a workflow owner. The workflow owner initially defines the package 270 by identifying the components of the workflow.

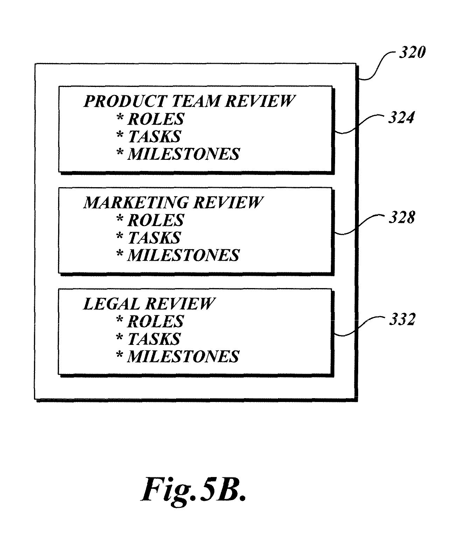

FIGURE 5B is a block diagram of the top level components of an exemplary workflow package 320. The illustrated exemplary workflow package 320 contains three top level components: Product Team Review 324, Marketing Review 328, and Legal Review 332, it being understood that a workflow package may contain more or less top level components designated the same or different. Each of the exemplary top level components is associated with a different group of workflow participants. For example, the Marketing Review component is associated with the marketing group participants included in the project the workflow is tracking. Each of the top level components is illustrated as containing lists of Roles, Tasks, and Milestones, with the understanding that the number and identification of these lists is exemplary and should not be construed as limiting. That is, a top level component may contain more or less lists and the lists may or may not be Roles, Tasks, and Milestones.

Returning to FIGURE 5A, after defining the package 270, the workflow owner inserts a workflow schedule into the package 272. Then the workflow owner inserts the types of tasks that will be contained in the workflow into the package 274. Thereafter the workflow owner inserts the forms participants will need to interact with the workflow into the package 276. The workflow owner next inserts the resources the workflow needs to operate into the package 278. The workflow owner then adds metadata about the workflow into the package manifest 280. A package manifest is a detailed description of the contents of an package. The package manifest contains metadata describing the name, version, types, and resources in the package and the dependencies upon other packages. The manifest allows a package to be self-describing and easily deployed. Finally, the workflow owner makes the package available for use 282. Obviously, the steps illustrated in FIGURE 5A, in particular the insert steps, can be accomplished in various sequences other than the sequence shown in FIGURE 5A and described above. In an embodiment of the invention a package may be one or more Microsoft® .NET™ assemblies. A Microsoft® .NET™ assembly is a code library that can be shared in a secure manner.

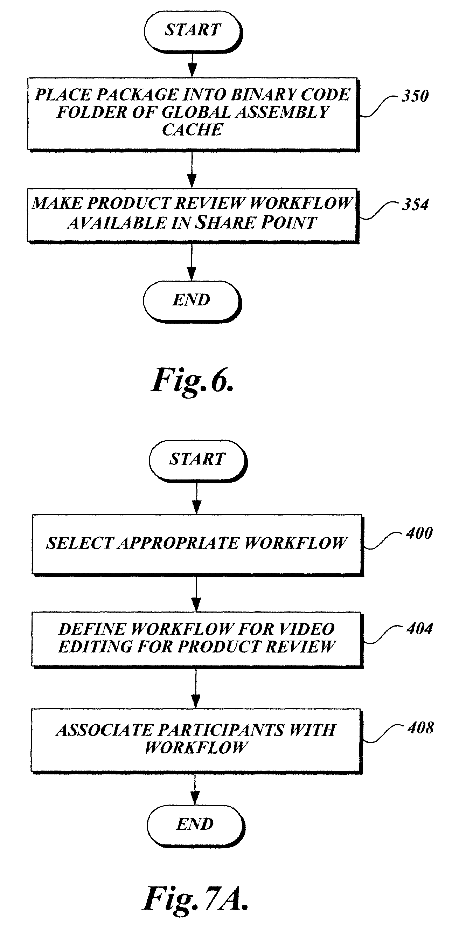

After being packaged, the workflow enters the Installation stage 208 (FIGURE 3). FIGURE 6 is an exemplary flow diagram showing how a workflow package may be installed. The workflow owner places the workflow package into a binary code folder of a Global Assembly Cache (GAC) 350. For example, the package may be put in the "GAC/bin folder," and the workflow package added to a feature list. The workflow owner then makes the workflow available via a suitable program such as SharePoint 354. In the example shown in FIGURE 6, the workflow is named "Product Review."

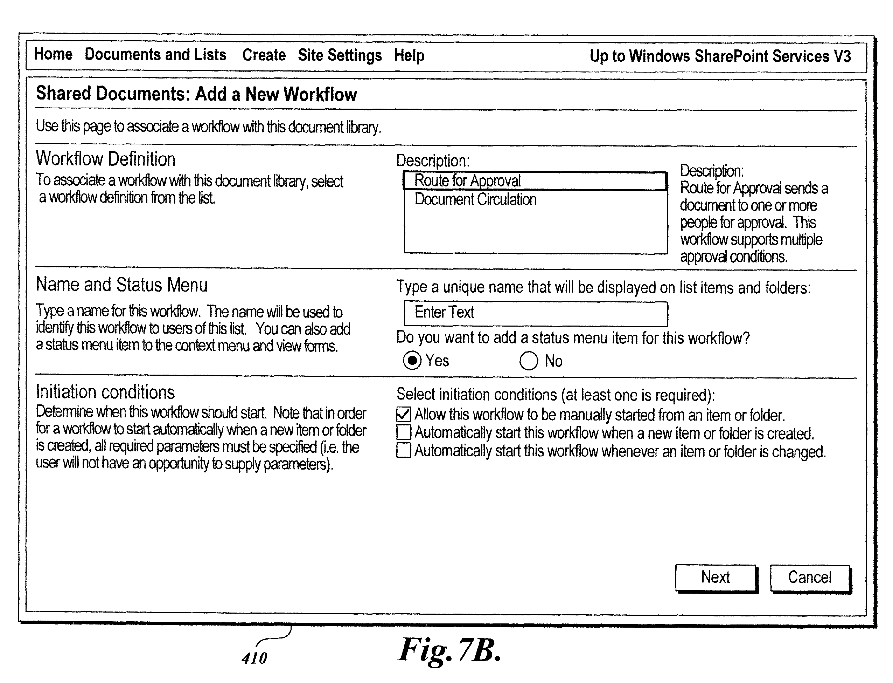

After a workflow is installed, the workflow enters the Deployment stage 212 (FIGURE 3). FIGURE 7A is an exemplary flow diagram that shows the activities that occur within the Deployment stage 212. At block 400, the owner selects an appropriate workflow form from a plurality of installed workflow forms. An appropriate workflow form contains the schedule and all or most of the components necessary to track the tasks involved in an aspect of the project being managed by the workflow. At block 404, the appropriate workflow template is used to create a workflow specifically for the project to be managed by the workflow. For example, the workflow named "Product Review" may be used as a template to define a new workflow named "Video Editing Product Review." FIGURE 7B shows an exemplary GUI form 410 suitable for creating such a workflow. The exemplary GUI form 410 includes three sections: "Workflow Definition"; "Name and Status Menu"; and "Initiation Conditions." The "Workflow Definition" section allows the owner to select a workflow definition, i.e., an existing workflow from which a workflow definition may be borrowed, from a plurality of installed workflows. The existing workflow is used as a template. For example, in FIGURE 7B the owner may select a "Route for Approval" or "Document Circulation" workflow template. By selecting one of the two aforementioned workflow templates, the owner associates a workflow with the document library that contains the documents associated with a project, e.g., "Video Editing Project." The workflow is now able to track all of the documents in the document library of the project. In the "Name and Status Menu" section, the owner enters a unique name for the workflow that will appear on the list items and folders in the document library. There is also a radio button to allow the user to add a menu item for this workflow to a status menu. In the "Initiation Conditions" section, the owner sets the conditions that will cause the workflow to start if all of the necessary workflow parameter values are set. At least one, and possibly more than one, initiation condition may be selected from the following conditions: "Allow this workflow to be manually started from an item or folder"; "Automatically start this workflow when a new item or folder is created."; and "Automatically start this workflow whenever an item or folder is changed." Block 408 of FIGURE 7A shows the final step in the Deployment stage 212 in which participants are associated with the workflow, in this example, the "Video Editing Product Review" workflow.

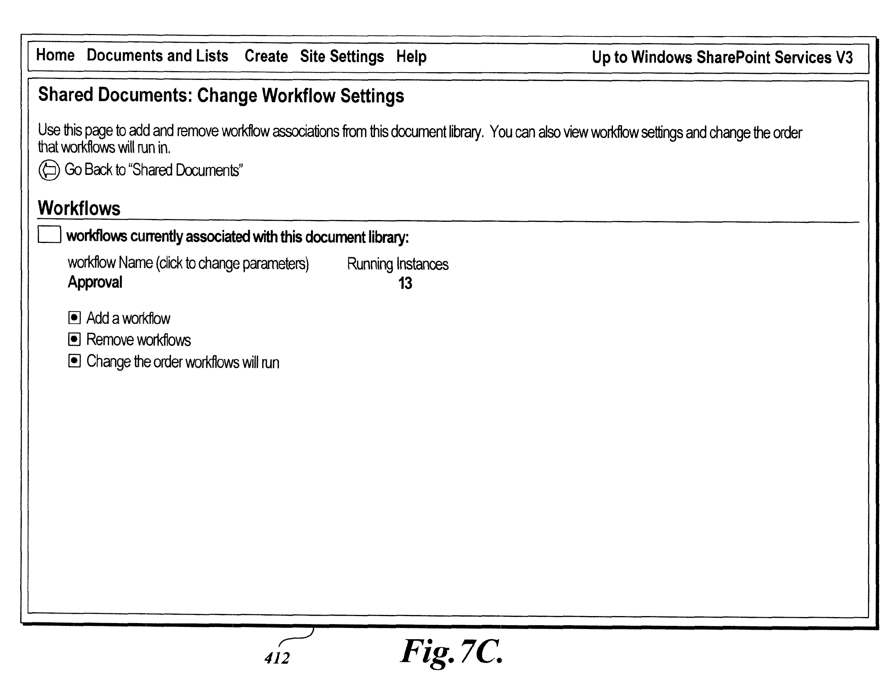

A document library may be involved in more than one project and, thus, may be associated with more than one workflow. FIGURE 7C is an exemplary GUI form 412 for adding or removing the workflows associated with a document library. The exemplary GUI form shown in FIGURE 7C also allows workflow settings to be viewed and the order that workflows run in changed. More specifically, the FIGURE 7C GUI form 412 displays the number of workflows associated with a document library and provides controls to select other GUI forms to associate a workflow with the document library, disassociate one or more workflows from the document library, and change the order in which associated workflows run.

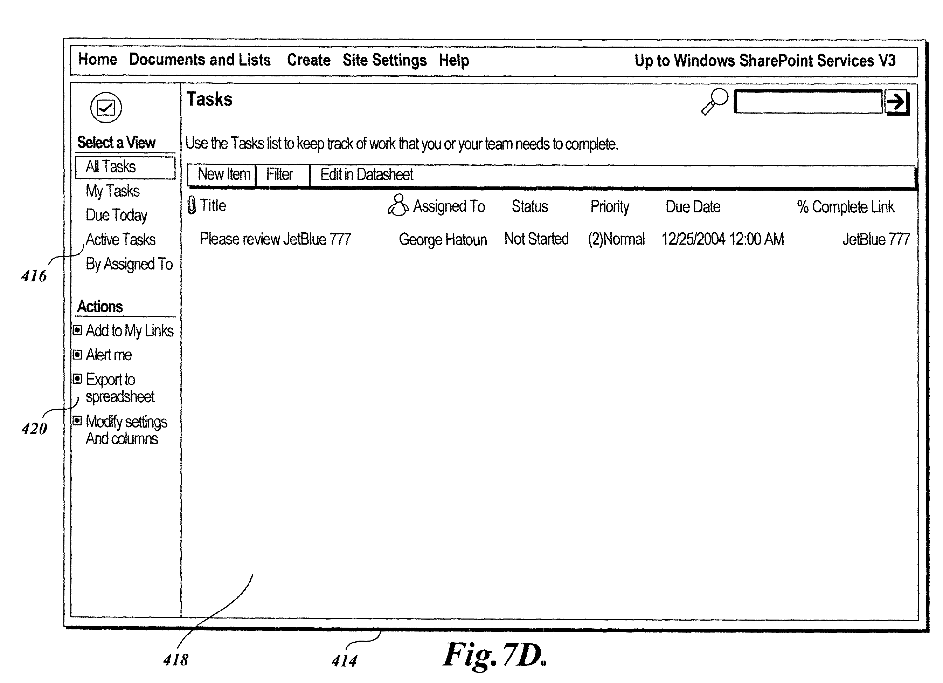

FIGURE 7D is an exemplary GUI form 414 for setting the tasks in a workflow. The GUI form provides five views 416 of the tasks in a workflow: all of the tasks in a workflow; the tasks in a workflow assigned to a logged on user; tasks in a workflow that are due on the current day; active tasks in a workflow; and tasks in a workflow by assignment. In a view pane 418, the title, assigned participant, status, priority, due date, and percentage of completeness of each task is presented based on the selected view 416. Controls 420 are provided to add the workflow to a list of favorite links, post an alert when something must be done in the workflow by a participant, export the workflow information to a spreadsheet, and modify the settings and columns of the report on the workflow.

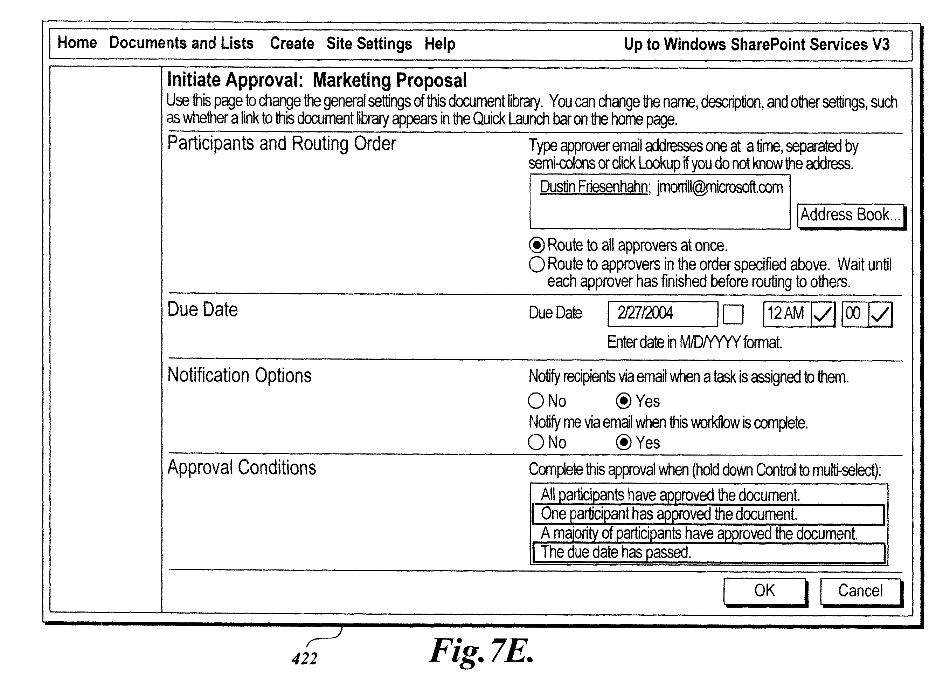

FIGURE 7E an exemplary GUI form 422 for changing the parameter values of a workflow associated with a document library. The GUI form 422 is divided into four sections: "Participants and Routing Order"; "Due Date"; "Notification Options"; and "Approval Conditions." In the "Participants and Routing Order" section, participants may be selected from an address book and added to the list of participants to associate with the document library associated with a workflow. A selection can be made to route the document library to all participants at the same time, or to route the document library to each participant in the order in which they appear in the list. In the "Due Date" section, a date and time on which approvals must be completed may be entered. In the "Notification Options" section, a selection may be made to notify each participant when a task has been assigned to them, and a selection may be made to notify the owner of the workflow when the workflow is complete. In the "Approval Conditions" section, one or more conditions indicating approval may be selected: "All participants have approved the document."; "One participant has approved the document."; "A majority of participants have approved the document."; and "The due date has passed."

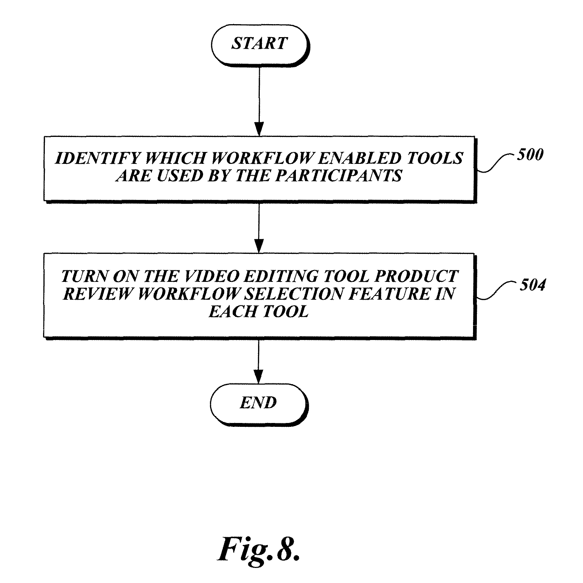

After a workflow is deployed, the workflow enters the Enablement stage 216 (FIGURE 3). FIGURE 8 is an exemplary flow diagram that shows the activities that occur within the Enablement stage 216. At block 500, the owner identifies which workflow enabled tools are used by the participants 500. The workflow enabled tools used by the participants may have a menu item, or other control, inserted into them to access the workflow directly. At block 504, the owner turns on the workflow selection control in each workflow enabled tool, e.g., the owner turns on the "Video Editing Tool Product Review" workflow selection feature in each workflow enabled tool.

After a workflow is enabled, the workflow enters the Association stage 220 (FIGURE 3). The association activity that occurs during the Association stage 220 is associating a workflow with a content type or with a list. An associated workflow is a workflow that has been associated with a document library or list in order to make the document library or the list available to the users of the document library or list.

A content type is a collection of settings that can be applied to other content types or to lists (where a document library is a type of list). For example, a content type for a Specification might define columns of metadata on a document library list for inputting the Specification Writer, Specification Implementer, and Specification Area of a Specification document. The Specification content type might include a default document template to use when creating new documents of this content type. When the Specification content type is added to a document library, its setting are copied to the document library and users of the document library can save items or documents of that content type to the document library. Note that multiple content types can be added to the same list or document library, and that content types can also be added to other content types. A workflow association is a type of setting that can be added to content types. For example, one might add a Specification Approval workflow association to the Specification content type, and that workflow association will get copied to lists that Specification content type is added to. Subsequent changes to the workflow association on the Specification content type can be pushed down to document libraries that inherit from that content type, enabling site administrators to configure workflow settings in one place and broadcast them to a number of other places.

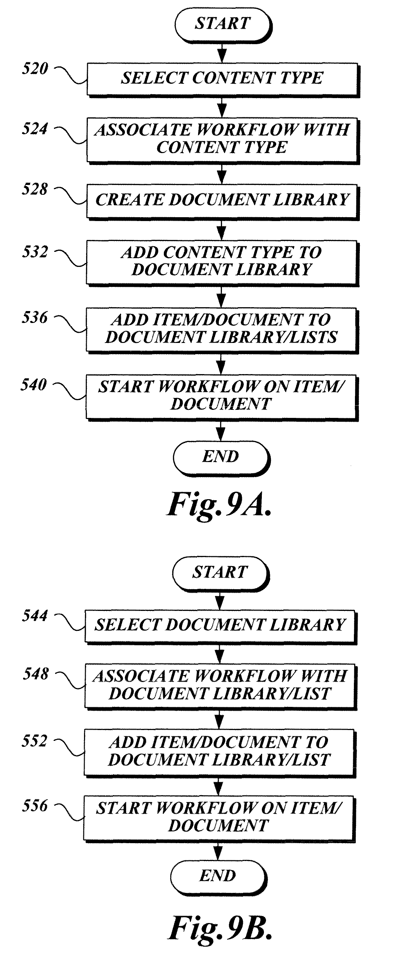

FIGURE 9A is an exemplary flow diagram showing how a workflow is associated with a content type. The advantage of such an association is that there may be tasks that can be based on the content type or characteristics of the content type. First, the content type is selected 520. Then the content type is associated with a workflow 524. At this point, although the association has been made, it is not very useful because there are no documents in the association. To prepare to add documents to the association, a document library is created 528. The content type is then added to the document library 532. At block 536, if an item, such as a list of documents of the appropriate content type, is available, the item may be added to the document library. Another option available at block 536 is to create a list of the appropriate content type, add documents of the appropriate content type to the list, and add the list to the document library. A third option at block 536 is to add an empty list of the appropriate content type to the document library and add documents of the appropriate content type to the list. Finally a workflow is started on an item or a document 540.

FIGURE 9B is an exemplary flow diagram showing how a workflow is associated with a heterogeneous document library, i.e., a document library permitting more than one content type. The advantage of such an association is that there may be tasks based on common characteristics that are not attributable to content type. First, the document library is selected 544. The workflow is then associated with the entire document library or one or more lists within the library 548. The three options available at block 536 in FIGURE 9A are also available at block 552 in FIGURE 9B. Finally, as in block 540, a workflow is started on an item or a document as shown in block 556.

Workflow association also may be accomplished by using a specific kind of GUI form, the workflow association form. Such a form is used to collect workflow parameters and restrictions from a list or from a profile manager. A workflow association form is defined in the workflow package that installed on the server and enabled on the site or site collection.

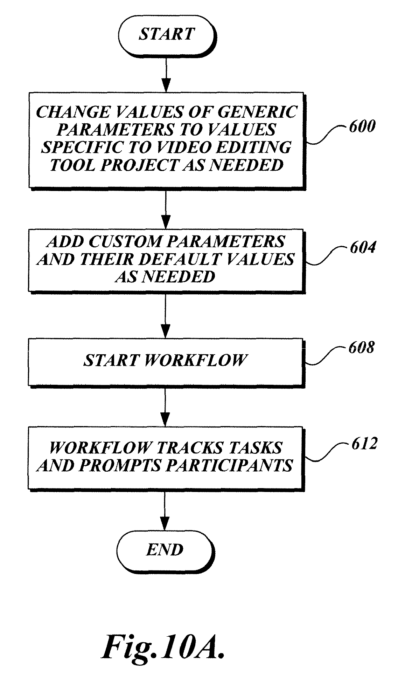

After a workflow is associated, the workflow enters the Instantiation stage 224 (FIGURE 3) during which the workflow is further adapted to the specific requirements of the project the workflow is to track. After the workflow has been adapted to the project tracked by the workflow, the workflow is made available to the participants of a workflow. FIGURE 10A is an exemplary flow diagram that shows the activities that occur within the Instantiation stage 224 for an exemplary project titled "Video Editing Tool Project." At block 600, the generic parameters in the workflow template are assigned values that are specific to the "Video Editing Tool Project." At block 604, custom parameters specific to the "Video Editing Tool Project" and default values for the custom parameters are added to the workflow. At block 608, the workflow for the "Video Editing Tool Project" is started, i.e., activated. Activation may take place explicitly. For example, a participant may submit a document for approval which may explicitly activate a workflow for approval of the document. Activation may also take place automatically. For example, after the documents required for an expense report are added to a document library associated with the expense report, a workflow for approval of the expense report document may be automatically activated. In both examples, an event is generated in the WSS subsystem to call a special event handler that directs the workflow engine to instantiate a workflow schedule of the required type. The owner or participant who triggered the generation of the workflow will be prompted for specific parameters that are bound to variables described in the schedule. The generation of the form used to prompt the owner or participant is based on metadata that was made available from the workflow definition at the time of deployment.

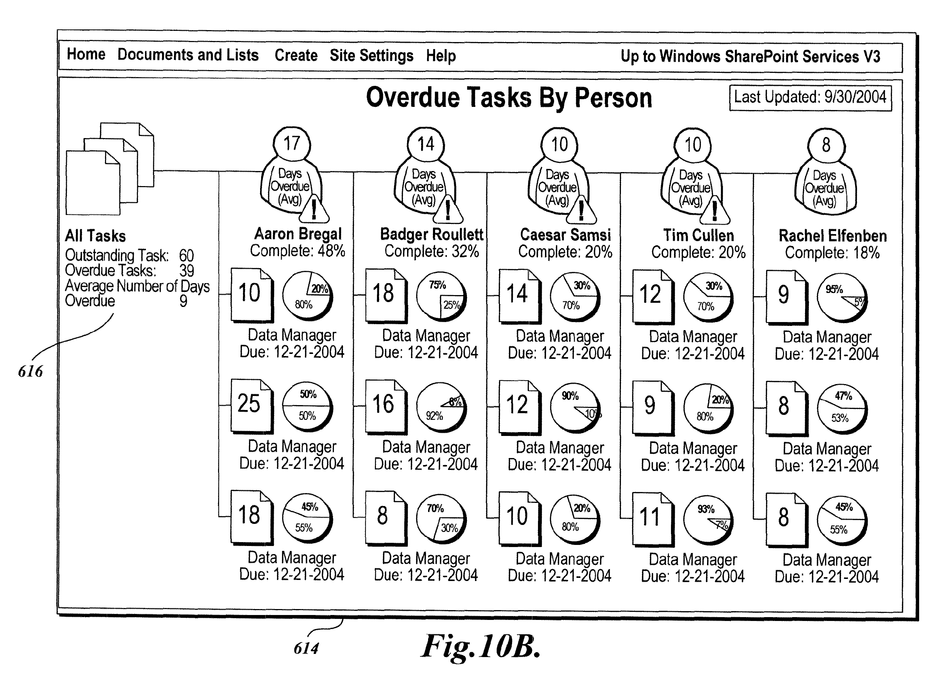

Starting a workflow activates the schedule that is associated with the workflow and runs in the workflow engine 170 (FIGURE 2). As previously described to some extent, as the schedule runs in the workflow engine, tasks in the schedule that have been assigned to participants cause workflow instructions 166 to be sent to the WSS Workflow OM 158. The WSS Workflow OM 158 translates such workflow instructions 166 into messages that are sent to applications 156. When an application 156 receives such a message, the application presents information concerning the task in a GUI form. For example, the exemplary GUI form 614 shown in FIGURE 10B provides a view of information concerning overdue workflow tasks. The exemplary GUI form 616 shown in FIGURE 10B includes a summary of information about all of the tasks in the workflow. The summary includes the total of outstanding tasks, the total of overdue tasks, and the average number of days tasks have been overdue. A column of information about the tasks assigned to each participant is provided. The topmost entry in a column shows the participant's name, the average number of days overdue, and the task completion percentage. Each of the remaining entries in a column show the number of days each assigned task is overdue, the percentage of task completion, the name of the task, and the due date of the task.

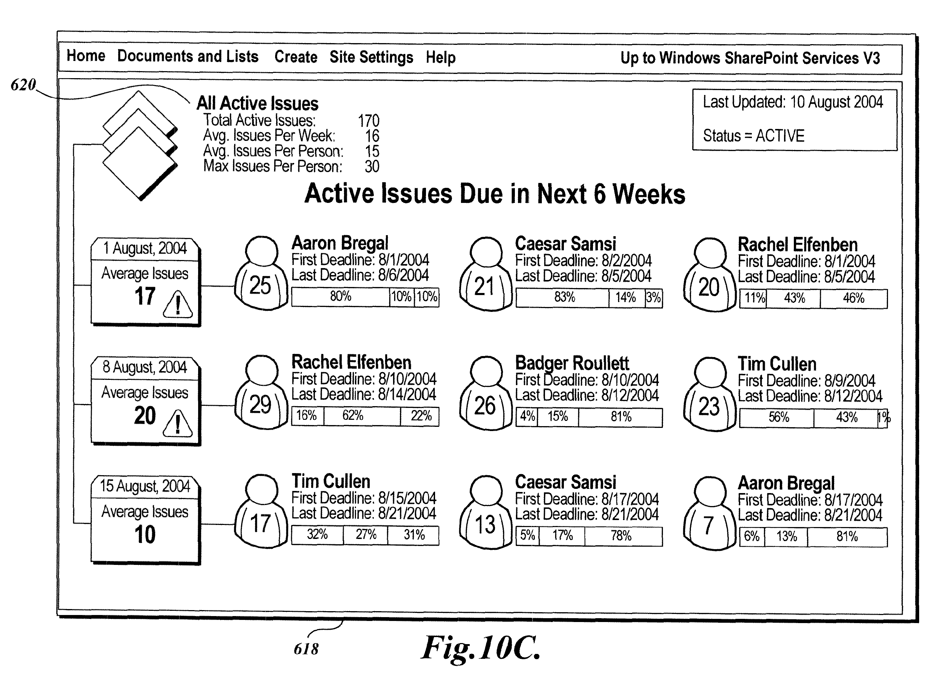

FIGURE 10C is an exemplary GUI form 618 that a workflow owner may invoke to view a summary of active issues, i.e., tasks, in a workflow over a number a weeks. The exemplary GUI form shows a summary of all active tasks in the workflow 620 that includes the total number of active tasks, the average number of active tasks per week, the average number of active tasks per person, and the maximum number of active tasks per person. The exemplary GUI form 618 shown in FIGURE 10C also provides rows of information for each week in the time period reported. Each row begins with an entry showing the starting date of a week in the time period covered and the average number of active tasks in that week. Each of the remaining entries in a row shows the name of a participant, the number of active tasks assigned to the participant, the first and last deadlines for which the participant is responsible, and the percentage of task completion.

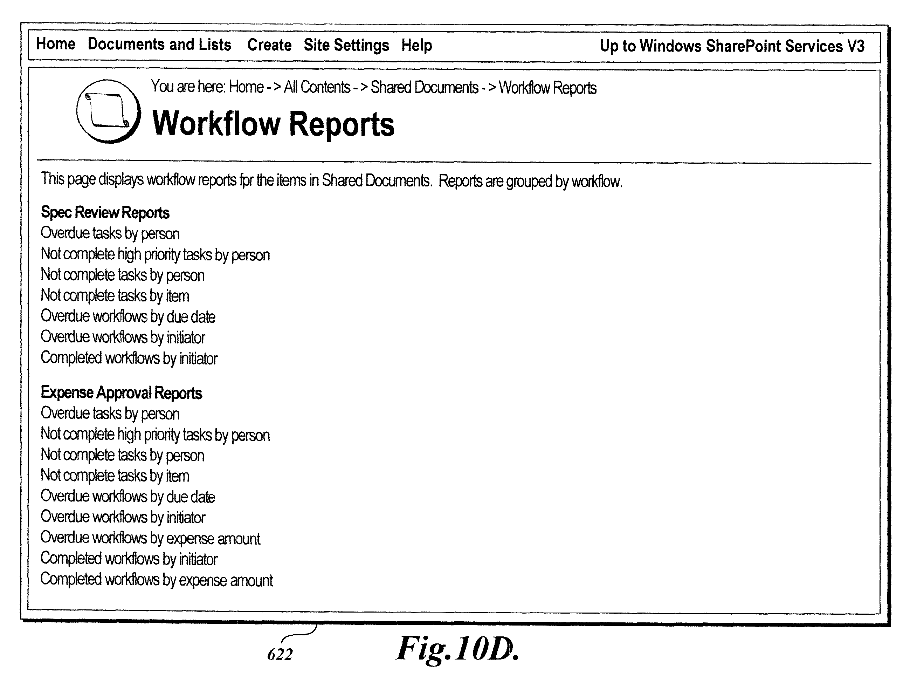

A workflow owner may generate a variety of reports about a workflow using the exemplary GUI form 622 shown in FIGURE 10D. The exemplary GUI form 622 shown in FIGURE 10D provides two kinds of reports: Specification Review Reports and Expense Approval Reports. Specification Review Reports comprise Overdue tasks by person, Not complete high priority tasks by person, Not complete tasks by person, Not complete tasks by item, Overdue workflows by due date, Overdue workflows by initiator, and Completed workflows by initiator. Expense Approval Reports comprise Overdue tasks by person, Not complete high priority tasks by person, Not complete tasks by person, Not complete tasks by item, Overdue workflows by due date, Overdue workflows by initiator, Overdue workflows by expense amount, Completed workflows by initiator, and Completed workflows by expense amount.

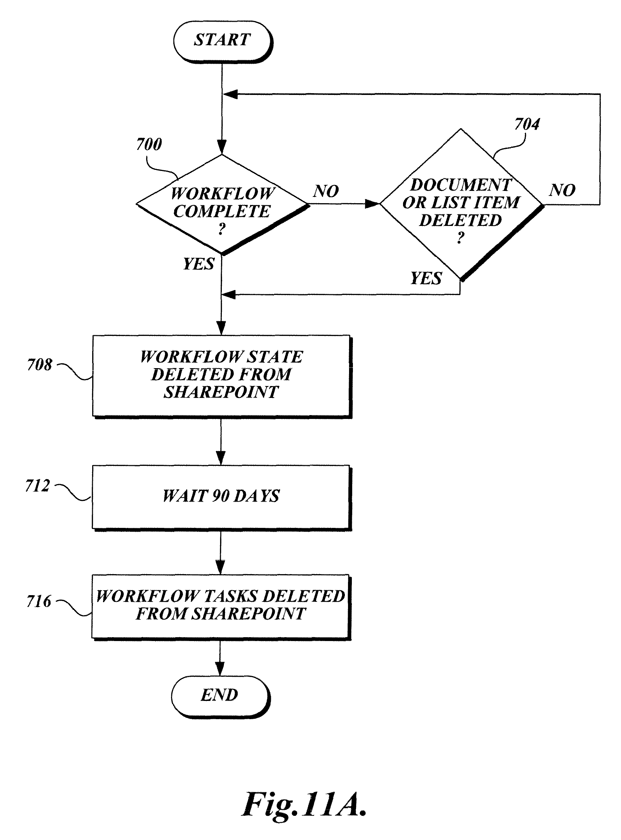

In the exemplary workflow lifecycle shown in FIGURE 3, the last stage is the Termination stage 228. FIGURE 11A is an exemplary flow diagram that shows how a workflow may be terminated. When a task in a workflow is completed, and also at regular time intervals, a workflow is checked for completeness 700. If the workflow has completed, the workflow state is deleted from SharePoint 708. If a workflow is not complete, but the document or list with which the workflow is associated is deleted 704, the workflow is deleted from SharePoint 708. If the document or list is not deleted, the process cycles back to the workflow complete test 700.

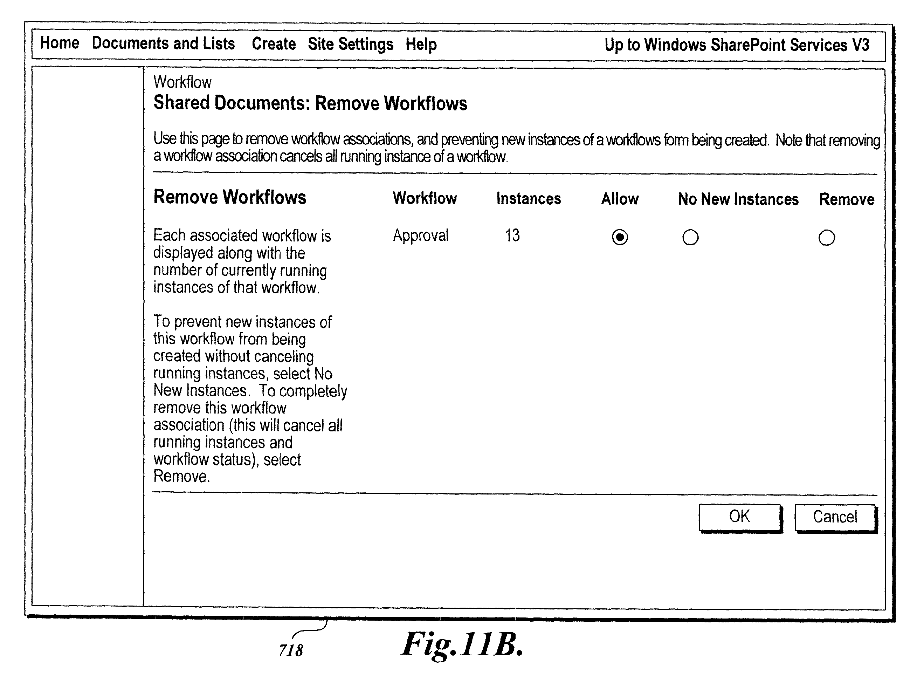

Regardless of how the workflow was deleted, SharePoint waits a user-configurable number of days, e.g., 90 days, to allow the owner of a workflow to delete the workflow or restart it 712. If a workflow is not restarted after ninety days, the workflow tasks are deleted from SharePoint and no longer tracked 716. FIGURE 11B is an exemplary GUI form which enables termination of workflows. The GUI form displays the title of the workflow and the number instances of the workflow. The owner may choose to allow new instances of the workflow to be created, choose to restrict the creation of new workflow instances without removing running instances of workflows, or remove all running instances of a workflow. A workflow task list has a usage counter that tracks how many workflows are associated with it. If an attempt is made to delete a workflow task list with a count that is greater than zero, a warning is issued that the workflow task list is still being used.

Embodiments of the invention may provide status information about a workflow such as real-time status for specific workflows and aggregated information about a set of workflows. For example, an embodiment of the invention may provide a collection of approval comments for an item in a workflow, a collection of approvers who have signed off on certain items, a set of workflows that are currently active and in use, or metrics for various aspects of a business process.

While the present preferred embodiment of the invention has been illustrated and described, it will be appreciated that various changes can be made therein without departing from the spirit and scope of the invention. For example, within the context of SharePoint, a workflow may be associated with, or operate with, many kinds of forms including, but not limited to, a standard Microsoft Outlook message form. Also within the context of SharePoint, an embodiment of the invention may operate with a custom user interface comprising custom fields and other controls. While the embodiments of the invention described above are used for business processes having to do with the development and maintenance of Web sites in the context of SharePoint, it will be appreciated that the invention may be applied to other types of business processes in other contexts. In this regard it should be understood that the invention can be implemented other than in connection with SharePoint. Thus, it is to be understood that within the scope of the appended claims this invention can be practiced otherwise then as specifically described herein.

The embodiments of the invention in which an exclusive property or privilege is claimed are defined as follows:

## Claims

1. A method of creating a software program for supporting how work flows through a business process (i.e., a workflow), comprising:
(a) in response to user input, defining a workflow and designing forms to support the workflow using previously developed templates;
(b) installing the workflow on a server;
(c) associating participants with the workflow;
(d) enabling the workflow; and
(e) associating the workflow with a document library.

2. The method of Claim 1 wherein defining a workflow and designing forms to support the workflow using previously developed templates includes designing forms that support the schedule and metadata of the workflow.

3. The method of Claim 2 wherein defining a workflow and designing forms to support the workflow using previously developed templates includes defining how the workflow is to be tracked.

4. The method of Claim 1 wherein defining a workflow and designing forms to support the workflow using previously developed templates includes packaging the workflow.

5. The method of Claim 4 wherein packaging the workflow includes:
(a) inserting a workflow schedule into a package;
(b) inserting task types into the package;
(c) inserting forms into the package;
(d) inserting resources into the package; and
(e) adding metadata to the package manifest.

6. The method of Claim 1 also including, in response to user input, starting the workflow.

7. The method of Claim 1. including terminating the workflow.

8. The method of Claim 1 wherein associating the workflow with a document library includes creating a document library, creating a content type and associating a workflow to the content type, adding that content type to the list or document library, and adding documents of the appropriate content type to the list or document library.

9. The computer-implemented method for managing workflows, said method comprising:
(a) developing a workflow;
(b) packaging the workflow;
(c) installing the workflow on a server;
(d) deploying the workflow;
(e) enabling the workflow;
(f) associating the workflow with a schedule;
(g) instantiating the workflow; and
(h) terminating the workflow.

10. The computer-implemented method of Claim 9 wherein developing the workflow comprises:
(a) designing workflow forms using workflow templates, said workflow forms including parameters; and
(b) assigning values to the parameters of said workflow forms.

11. The computer-implemented method of Claim 9 wherein said workflow includes a plurality of tasks to be performed by participants.

12. The computer-implemented method of Claim 9 wherein said workflow has a structure and, wherein said structure is described by a declarative language.

13. The computer-implemented method of Claim 11 wherein said workflow structure is stored for use in the creation of other workflows.

14. A computer-implemented method for managing workflows, said method comprising:
(a) creating a workflow from preprogrammed components, said preprogrammed components including templates suitable for creating forms, said templates including parameters;
(b) assigning values to the parameters of said workflow forms;
(c) installing said workflow forms on a server; and
(d) associating participants with said workflow.

15. The computer-implemented method of Claim 14, including enabling the workflow forms for use by participants.

16. The computer-implemented method of Claim 14, including associating the workflow forms with a document library.

17. The computer-implemented method of Claim 14 wherein the workflow includes a plurality of tasks, said tasks being associated with said participants.

18. The computer-implemented method of Claim 14 wherein said workflow includes a schedule and wherein said tasks are associated with said participants according to said schedule.

19. The computer-implemented method of Claim 18 wherein said workflow creates a report of the status of the accomplishment of said tasks.

20. The computer-implemented method of Claim 14 wherein said workflow has a structure and, wherein said structure is described by a declarative language.
